# EUROPEAN PATENT APPLICATION

(11) **EP 4 790 363 A1**
(43) Date of publication of application: **12.08.2026**
(21) Application number: 24874092.0
(22) Date of filing: 30.09.2024
(51) Int. Cl.: G01B 21/20, G01B 11/24, G01B 3/22

(54) **SCANNING MECHANISM HAVING PROTECTION SYSTEM**

(30) Priority: 07.10.2023 CN 202311285794
(71) Applicant: Chotest Technology Inc., Shenzhen, Guangdong 518071 (CN)
(72) Inventor: XIAO, Tian, Shenzhen, Guangdong 518071 (CN); ZOU, Gongwen, Shenzhen, Guangdong 518071 (CN); LIU, Yang, Shenzhen, Guangdong 518071 (CN)
(74) Representative: Isern Patentes y Marcas S.L.
(86) International application number: PCT/CN2024/122948
(87) International publication number: WO 2025/073275

(57) **Abstract**

The present disclosure describes a scanning mechanism with a protection system. The scanning mechanism includes a detection element for scanning an object to be measured, the protection system includes a base, a moving part, a sensing device, and an elastic reset device, the detection element is disposed on the moving part, the moving part is movably connected to the base through the elastic reset device, the sensing device generates a sensing signal upon sensing that the moving part is displaced relative to the base and a displacement amount exceeds a preset threshold, and the scanning mechanism is enabled to stop scanning based on the sensing signal. Therefore, a scanning mechanism with a protection system can be provided, and the protection system can protect the scanning mechanism.

## Description

### BACKGROUND OF INVENTION

The present disclosure relates generally to the field of intelligent manufacturing, and in particular to a scanning mechanism with a protection system.

### Description of Related Art

With the continuous improvement of the industrial development level, the demand for high-precision measurement of complex shapes and tiny dimensions of products is increasing day by day, and conventional manual measurement methods have been difficult to meet people's pursuit of high-precision measurement.

A profile measuring instrument (also referred to as a profilometer) is an industrial measuring instrument for high-precision measurement of a surface profile (for example, roughness or shape) of a workpiece. According to different working principles, profilometers may be divided into contact profilometers and optical 3D surface profilometers, wherein for the contact profilometer, a scanning mechanism drives a measuring pin to abut against a surface of the workpiece, and drives the measuring pin to move on the surface of the workpiece to scan the surface of the workpiece, so as to acquire two-dimensional coordinates of the surface profile of the workpiece, then a software system is utilized for analyzing and processing coordinate data, and the shape of the surface profile of the workpiece may be drawn.

For the contact profilometer, although the scanning mechanism has a relatively strong climbing capability when driving the measuring pin to scan a workpiece to be measured, in some extreme cases, for example, surfaces of some workpieces to be measured may have relatively obvious pits or burrs due to processing, the measuring pin may be caught by the pits or burrs (for example, the measuring pin is hooked by the pits) during a process of scanning the workpiece to be measured by the measuring pin, and at this time, if the scanning mechanism is not enabled to timely stop scanning, the scanning mechanism may be damaged.

### SUMMARY OF INVENTION

The present disclosure is provided in view of the above circumstances, and an object thereof is to provide a scanning mechanism with a protection system, wherein the protection system can protect the scanning mechanism.

For the above purpose, the present disclosure provides a scanning mechanism with a protection system. The scanning mechanism includes a detection element for scanning an object to be measured, the protection system includes a base, a moving part, a sensing device, and an elastic reset device, the detection element is disposed on the moving part, the moving part is movably connected to the base through the elastic reset device, the sensing device generates a sensing signal upon sensing that the moving part is displaced relative to the base and a displacement amount exceeds a preset threshold, and the scanning mechanism is enabled to stop scanning based on the sensing signal.

In the present disclosure, the detection element is disposed on the moving part, so that the moving part and the detection element can move synchronously during a process of scanning the object to be measured by the detection element. Since the moving part is movably connected to the base, when a motion state of the detection element changes, a motion state of the moving part can be caused to change, thereby enabling the moving part to be displaced relative to the base. In addition, the displacement amount of the moving part relative to the base can be monitored by the sensing device, and when the displacement amount exceeds the preset threshold, the sensing device sends the sensing signal, so that the scanning mechanism can be enabled to timely stop scanning based on the sensing signal to protect the scanning mechanism from damage.

In addition, in the scanning mechanism according to the present disclosure, optionally, the detection element scans the object to be measured in a manner of abutting against the object to be measured, the elastic reset device includes a first elastic element, a second elastic element, a connecting rod movably disposed between the base and the moving part, and a first fastener and a second fastener fixedly disposed on the connecting rod, the moving part is configured to cooperate with the first fastener and the first elastic element, and the base is configured to cooperate with the second fastener and the second elastic element, so as to achieve: the moving part and the base remain relatively stationary when a first elastic acting force applied by the first elastic element to the moving part or a second elastic acting force applied by the second elastic element to the base is greater than a frictional force applied to the detection element during scanning of the object to be measured; the moving part is displaced relative to the base when the first elastic acting force or the second elastic acting force is less than the frictional force; and the moving part is displaced relative to the base when the first elastic acting force or the second elastic acting force is less than an impact force applied to the detection element. In this case, during a process where the scanning mechanism drives the detection element to scan the object to be measured, by enabling the moving part and the base to remain relatively stationary, the occurrence of a case where the moving part slides relative to the base due to inertia can be suppressed, that is, the possibility that the moving part is displaced relative to the base due to inertia can be reduced. Therefore, the scanning mechanism can have better stability, so that the accuracy of the acquired profile data can be improved. In addition, when the moving part is displaced relative to the base, the sensing device can be enabled to timely detect that the scanning mechanism is in an abnormal scanning state by sensing the relative displacement between the moving part and the base, so that the scanning mechanism can be timely controlled to stop moving to protect the scanning mechanism.

In addition, in the scanning mechanism according to the present disclosure, optionally, the first elastic element or the second elastic element further accumulates elastic potential energy when the moving part is displaced relative to the base. In this case, during a process of accumulating the elastic potential energy by the first elastic element or the second elastic element, the frictional force or impact force applied to the detection element can be buffered, so that the impact of an external acting force on the scanning mechanism can be reduced, thereby enabling the scanning mechanism to obtain buffer protection.

In addition, in the scanning mechanism according to the present disclosure, optionally, the scanning mechanism includes a scanning shaft, the detection element is connected to one end of the scanning shaft, the connecting rod is parallel to the scanning shaft, the moving part includes a first connecting block, the first connecting block is movably sleeved on the connecting rod, the base includes a second connecting block, and the second connecting block is movably sleeved on the connecting rod. In this case, since the connecting rod is parallel to the scanning shaft, the first connecting block and the second connecting block can be enabled to move along a scanning direction of the scanning mechanism. In addition, the first connecting block and the second connecting block are movably sleeved on the connecting rod, so that the moving part can be movably connected to the base through the connecting rod. In addition, it is facilitated for the moving part to cooperate with the first fastener and the first elastic element on the connecting rod to enable the protection system to achieve a preset function. In addition, it can be facilitated for the base to cooperate with the second fastener and the second elastic element on the connecting rod to enable the protection system to achieve a preset function.

In addition, in the scanning mechanism according to the present disclosure, optionally, the elastic reset device includes a third fastener, the first fastener, the second fastener and the third fastener are fixedly disposed on the connecting rod in sequence, the first elastic element is connected to the first fastener and the first connecting block, the first connecting block is positioned between the first fastener and the second fastener, the first elastic element is compressed to enable the first connecting block to abut against the second fastener, the second elastic element is connected to the second fastener and the second connecting block, the second connecting block is positioned between the second fastener and the third fastener, and the second elastic element is compressed to enable the second connecting block to abut against the third fastener. In this case, the first elastic element in a compressed state applies a pushing force to the first connecting block to enable the first connecting block to abut against the second fastener, and the second elastic element in a compressed state applies a pushing force to the second connecting block to enable the second connecting block to abut against the third fastener. Since the first fastener, the second fastener and the third fastener are fixedly disposed on the connecting rod respectively, a relatively stable relative stationary state can be remained between the first connecting block and the second connecting block. During the process of scanning the object to be measured by the detection element, the occurrence of a case where the moving part slides relative to the base due to inertia can be suppressed, that is, the possibility that the moving part is displaced relative to the base due to inertia can be reduced. Therefore, the scanning mechanism can have better stability.

In addition, in the scanning mechanism according to the present disclosure, optionally, the elastic reset device includes a third fastener and a fourth fastener, the first fastener, the second fastener, the third fastener and the fourth fastener are fixedly disposed on the connecting rod in sequence, the first elastic element is connected to the first fastener and the first connecting block, the first connecting block is positioned between the second fastener and the third fastener, the first elastic element is stretched to enable the first connecting block to abut against the second fastener, the second elastic element is connected to the third fastener and the second connecting block, the second connecting block is positioned on one side of the fourth fastener away from the third fastener, and the second elastic element is stretched to enable the second connecting block to abut against the fourth fastener. In this case, the first elastic element in a stretched state applies a pulling force to the first connecting block to enable the first connecting block to abut against the second fastener, and the second elastic element in a stretched state applies a pulling force to the second connecting block to enable the second connecting block to abut against the fourth fastener. Since the first fastener, the second fastener, the third fastener and the fourth fastener are fixedly disposed on the connecting rod respectively, a relatively stable relative stationary state can be remained between the first connecting block and the second connecting block. During the process of scanning the object to be measured by the detection element, the occurrence of a case where the moving part slides relative to the base due to inertia can be suppressed, that is, the possibility that the moving part is displaced relative to the base due to inertia can be reduced. Therefore, the scanning mechanism can have better stability.

In addition, in the scanning mechanism according to the present disclosure, optionally, the first connecting block extends toward a length direction of the connecting rod to form a hollow first extension part, and the second connecting block extends toward the length direction of the connecting rod to form a hollow second extension part, wherein the first extension part and the second extension part are movably sleeved on the connecting rod. In this case, the first extension part can facilitate the cooperation of the first connecting block with the first fastener and the first elastic element on the connecting rod to enable the protection system to achieve a preset function, thereby protecting the scanning mechanism. In addition, the second extension part can facilitate the cooperation of the second connecting block with the second fastener and the second elastic element on the connecting rod to enable the protection system to achieve a preset function, thereby protecting the scanning mechanism.

In addition, in the scanning mechanism according to the present disclosure, optionally, the first extension part is movably sleeved on an outer periphery of the first elastic element, the first elastic element is connected to the first fastener and the first connecting block, the first elastic element is stretched to enable the first extension part to abut against one side of the first fastener facing the second fastener, the second extension part is movably sleeved on an outer periphery of the second elastic element, the second elastic element is connected to the second fastener and the second connecting block, and the second elastic element is stretched to enable the second extension part to abut against one side of the second fastener away from the first fastener. In this case, the first elastic element in a stretched state applies a pulling force to the first connecting block to enable the first extension part to abut against the first fastener, and the second elastic element in a stretched state applies a pulling force to the second connecting block to enable the second extension part to abut against the second fastener. Since the first fastener and the second fastener are fixedly disposed on the connecting rod respectively, a relatively stable relative stationary state can be remained between the first connecting block and the second connecting block. During the process of scanning the object to be measured by the detection element, the occurrence of a case where the moving part slides relative to the base due to inertia can be suppressed, that is, the possibility that the moving part is displaced relative to the base due to inertia can be reduced. Therefore, the scanning mechanism can have better stability. In addition, the moving part and the base can remain relatively stationary with fewer components, and the elastic reset device can occupy less space.

In addition, in the scanning mechanism according to the present disclosure, optionally, the first extension part is movably sleeved on outer peripheries of the first elastic element and the first fastener, the first elastic element is connected to the first fastener and the first connecting block, the first elastic element is compressed to enable the first extension part to abut against one side of the first fastener away from the second fastener, the second extension part is movably sleeved on outer peripheries of the second elastic element and the second fastener, the second elastic element is connected to the second fastener and the second connecting block, and the second elastic element is compressed to enable the second extension part to abut against one side of the second fastener facing the first fastener. In this case, the first elastic element in a compressed state applies a pushing force to the first connecting block to enable the first extension part to abut against the first fastener, and the second elastic element in a compressed state applies a pushing force to the second connecting block to enable the second extension part to abut against the second fastener. Since the first fastener and the second fastener are fixedly disposed on the connecting rod respectively, a relatively stable relative stationary state can be remained between the first connecting block and the second connecting block. During the process of scanning the object to be measured by the detection element, the occurrence of a case where the moving part slides relative to the base due to inertia can be suppressed, that is, the possibility that the moving part is displaced relative to the base due to inertia can be reduced. Therefore, the scanning mechanism can have better stability. In addition, the moving part and the base can remain relatively stationary with fewer components, and the elastic reset device can occupy less space.

In addition, in the scanning mechanism according to the present disclosure, optionally, the sensing device includes a sensing plate disposed on the moving part, and a sensing unit disposed on the base and cooperating with the sensing plate. In this case, when the moving part and the base are displaced relative to each other, the sensing plate and the sensing unit can be displaced relative to each other synchronously, so that the sensing device can generate a sensing signal upon sensing that the moving part and the base are displaced relative to each other.

According to the present disclosure, a scanning mechanism with a protection system can be provided, and the protection system can protect the scanning mechanism.

### BRIEF DESCRIPTION OF THE DRAWINGS

FIG. 1 is a schematic diagram showing a profile measuring instrument according to an example of the present disclosure.
FIG. 2 is a schematic diagram showing a scanning mechanism and a driving mechanism according to an example of the present disclosure.
FIG. 3 is a schematic diagram showing the scanning mechanism according to an example of the present disclosure.
FIG. 4 is a schematic diagram showing a protection system according to an example of the present disclosure.
FIG. 5 is a schematic diagram showing a position of a sensing device according to an example of the present disclosure.
FIG. 6 is a schematic diagram showing an elastic reset device according to an example of the present disclosure.
FIG. 7A is a schematic diagram showing a first alternative embodiment of the elastic reset device according to an example of the present disclosure.
FIG. 7B is a schematic diagram showing a second alternative embodiment of the elastic reset device according to an example of the present disclosure.
FIG. 7C is a schematic diagram showing a third alternative embodiment of the elastic reset device according to an example of the present disclosure.
FIG. 7D is a schematic diagram showing a fourth alternative embodiment of the elastic reset device according to an example of the present disclosure.
FIG. 8 is a schematic diagram showing a cross section of the scanning mechanism according to an example of the present disclosure.

### DETAILED DESCRIPTION

The technical solutions in the embodiments of the present disclosure will be clearly and completely described below with reference to the accompanying drawings in the embodiments of the present disclosure. Apparently, the described embodiments are only some of the embodiments of the present disclosure, but not all of them. Based on the embodiments in the present disclosure, all other embodiments obtained by those ordinarily skilled in the art without creative efforts shall fall within the scope of protection of the present disclosure.

It should be noted that the terms "first", "second", "third", "fourth" and the like in the description and claims of the present disclosure and the above drawings are used to distinguish different objects rather than to describe a specific order. In addition, the terms "including", "having" and any variations thereof are intended to cover non-exclusive inclusion. For example, a process, method, system, product or equipment containing a series of steps or units is not limited to the listed steps or units, but optionally further includes unlisted steps or units, or optionally further includes other steps or units inherent to this process, method, product or equipment. In the following description, the same reference numerals are assigned to the same components, and repeated descriptions are omitted. In addition, the drawings are only schematic diagrams, and the dimensional ratios between components or the shapes of components may differ from actual ones.

The present disclosure relates to a scanning mechanism with a protection system, wherein the protection system can protect the scanning mechanism and enable the scanning mechanism to have better stability.

In addition, the scanning mechanism according to the present disclosure may be applied to a profile measuring instrument (that is, a profilometer), and in particular, may be applied to a contact profilometer. The contact profilometer may scan an object to be measured through the scanning mechanism according to the present disclosure to acquire profile data of the object to be measured.

The scanning mechanism with the protection system according to the present disclosure will be described and explained below with reference to the accompanying drawings.

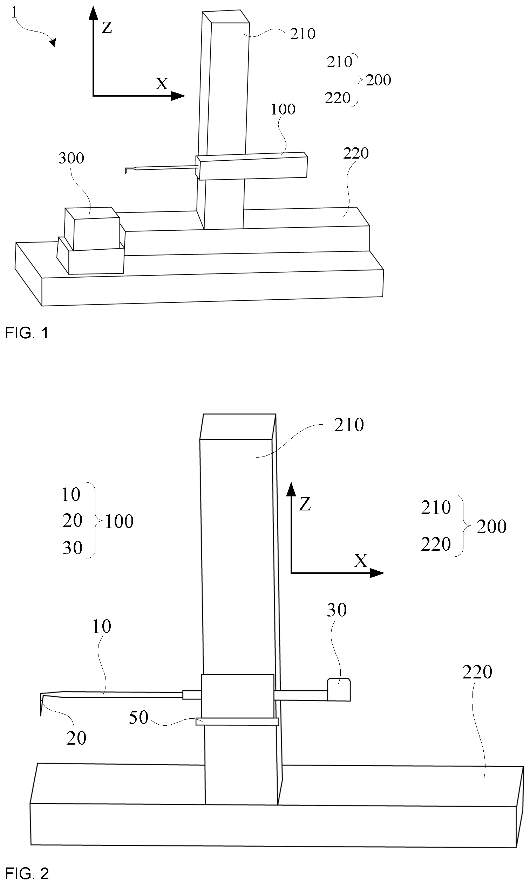

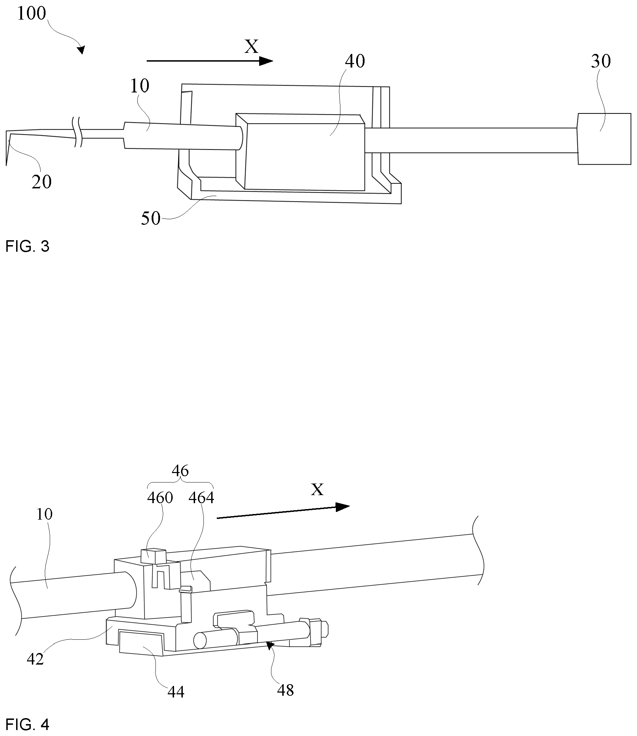

FIG. 1 is a schematic diagram showing a profile measuring instrument 1 according to an example of the present disclosure. FIG. 2 is a schematic diagram showing scanning mechanism 100 and driving mechanism 200 according to an example of the present disclosure. FIG. 3 is a schematic diagram showing scanning mechanism 100 according to an example of the present disclosure.

In some examples, referring to FIG. 1, the profile measuring instrument 1 may include worktable 300, scanning mechanism 100, and a driving mechanism 200. Worktable 300 may be used to place and clamp an object to be measured (for example, a workpiece to be measured), and scanning mechanism 100 may be driven by driving mechanism 200 to scan the object to be measured on worktable 300 to acquire profile data of the object to be measured.

In some examples, referring to FIG. 2, scanning mechanism 100 may include detection element 20. Detection element 20 may be used to scan the object to be measured. In some examples, detection element 20 may scan the object to be measured in a manner of abutting against the object to be measured.

In some examples, scanning mechanism 100 may include scanning shaft 10 and measuring system 30, wherein oneend of scanning shaft 10 may be connected to detection element 20, and the other end thereof may be connected to the measuring system 30.

In some examples, detection element 20 may be configured to contact a surface of the object to be measured and move on the surface of the object to be measured so as to be displaced up and down following a profile of the object to be measured. In addition, scanning shaft 10 may be configured to transmit an upper and lower displacement amount of detection element 20 to measuring system 30. In addition, measuring system 30 may be configured to acquire the profile data of the object to be measured based on the upper and lower displacement amount of detection element 20. In some examples, the profile data may include two-dimensional coordinates of the surface profile of the object to be measured.

In some examples, detection element 20 may also be referred to as a probe or measuring pin. In addition, scanning shaft 10 may also be referred to as a measuring shaft.

In some examples, scanning mechanism 100 may drive detection element 20 to scan the object to be measured through scanning shaft 10. Specifically, scanning mechanism 100 may be driven by driving mechanism 200 to move, so that scanning shaft 10 may drive detection element 20 to abut against the surface of the object to be measured and move on the surface of the object to be measured.

In some examples, referring to FIG. 1 or FIG. 2, driving mechanism 200 may include first driving mechanism 210 and second driving mechanism 220. First driving mechanism 210 may drive scanning mechanism 100 to move along a Z-axis direction, and second driving mechanism 220 may drive scanning mechanism 100 to move along an X-axis direction. In some examples, second driving mechanism 220 may drive scanning mechanism 100 to move along the X-axis direction by driving first driving mechanism 210 to move along the X-axis direction.

In some examples, referring to FIG. 2 or FIG. 3, scanning mechanism 100 may include bottom plate 50, and bottom plate 50 may be connected to first driving mechanism 210. In addition, bottom plate 50 may be used to support scanning mechanism 100, and in other words, scanning mechanism 100 is disposed on bottom plate 50. In this case, first driving mechanism 210 can drive scanning mechanism 100 to move along the Z-axis direction through bottom plate 50. In addition, second driving mechanism 220 can drive scanning mechanism 100 to move along the X-axis direction by driving first driving mechanism 210 to move along the X-axis direction.

In some examples, first driving mechanism 210 driving scanning mechanism 100 to move along the Z-axis direction may enable detection element 20 to abut against the surface of the object to be measured, and second driving mechanism 220 driving scanning mechanism 100 to move along the X-axis direction may enable detection element 20 to move on the surface of the object to be measured to scan the surface of the object to be measured. In some examples, the X-axis direction may represent a scanning direction of scanning mechanism 100.

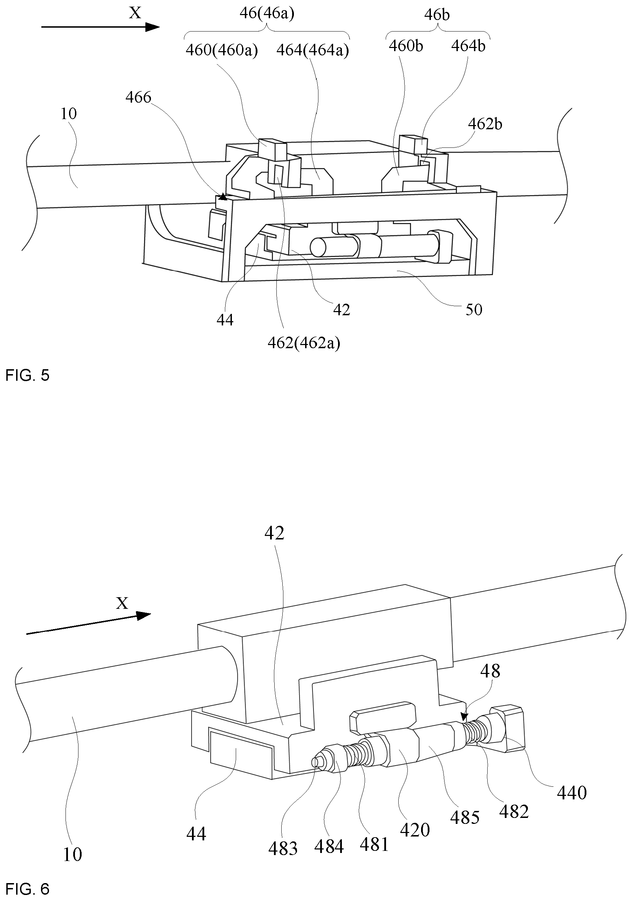

FIG. 4 is a schematic diagram showing protection system 40 according to an example of the present disclosure. FIG. 5 is a schematic diagram showing a position of sensing device 46 according to an example of the present disclosure. FIG. 6 is a schematic diagram showing elastic reset device 48 according to an example of the present disclosure.

In some examples, referring to FIG. 3, scanning mechanism 100 may include protection system 40, and protection system 40 may be configured to protect scanning mechanism 100.

In some examples, referring to FIG. 4, protection system 40 may include base 44, moving part 42, and sensing device 46, wherein moving part 42 may be movably connected to base 44, and sensing device 46 may be used to detect whether base 44 and moving part 42 are displaced relative to each other.

In some examples, protection system 40 may further include elastic reset device 48. Moving part 42 may be movably connected to base 44 through elastic reset device 48. In addition, detection element 20 may be disposed on moving part 42. In this case, during a process of scanning the object to be measured by detection element 20, moving part 42 and detection element 20 can move synchronously. Since moving part 42 is movably connected to base 44, when a motion state of detection element 20 changes, a motion state of moving part 42 can be caused to change, thereby enabling moving part 42 to be displaced relative to base 44.

In some examples, moving part 42 may be slidably disposed on base 44 through elastic reset device 48. Therefore, elastic reset device 48 can be utilized to facilitate the definition of a movable connection relationship between moving part 42 and base 44.

In some examples, moving part 42 may slide relative to base 44, and a sliding direction of moving part 42 may be consistent with the scanning direction of scanning mechanism 100. Therefore, moving part 42 can slide relative to base 44 along the scanning direction.

In some examples, scanning shaft 10 may be fixedly disposed on moving part 42. That is, scanning shaft 10 may be fixedly connected to moving part 42. In addition, detection element 20 may be connected to one end of scanning shaft 10. Therefore, detection element 20 can be disposed on moving part 42.

Specifically, referring to FIG. 4, scanning shaft 10 may be fixedly connected to moving part 42 in a manner of being parallel to an X-axis, and no relative motion occurs between scanning shaft 10 and moving part 42 along the X-axis direction. In this case, scanning shaft 10 and moving part 42 can be linked along the X-axis direction, so that scanning shaft 10 can drive moving part 42 to slide relative to base 44 along the X-axis direction.

In addition, scanning shaft 10 may rotate relative to moving part 42 in a manner of rotating around an axis in the Z-axis direction. Therefore, detection element 20 can be displaced up and down following the profile of the object to be measured when moving on the surface of the object to be measured.

In some examples, during a process where second driving mechanism 220 drives scanning mechanism 100 to move along the X-axis direction (for example, a positive direction of the X-axis) to drive detection element 20 to scan the object to be measured, base 44 and moving part 42 may move together along the positive direction of the X-axis simultaneously (that is, base 44 and moving part 42 may remain relatively stationary). When detection element 20 is caught by pits or burrs on the surface of the object to be measured, scanning shaft 10 stops moving, and moving part 42 connected to scanning shaft 10 also stops moving accordingly, but base 44 continues to move along the positive direction of the X-axis, thereby enabling moving part 42 to be displaced relative to base 44.

In addition, during a process where second driving mechanism 220 drives scanning mechanism 100 to move along the X-axis direction (for example, a negative direction of the X-axis) to drive detection element 20 to approach the object to be measured, base 44 and moving part 42 may move together along the negative direction of the X-axis simultaneously (that is, base 44 and moving part 42 remain relatively stationary). When detection element 20 collides with the object to be measured, scanning shaft 10 stops moving due to the blocking of the object to be measured, and moving part 42 connected to scanning shaft 10 also stops moving accordingly, but base 44 continues to move along the negative direction of the X-axis, thereby enabling base 44 to be displaced relative to moving part 42.

In some examples, during a process where scanning mechanism 100 drives detection element 20 to scan the object to be measured, base 44 and moving part 42 being displaced relative to each other may represent that scanning mechanism 100 is in an abnormal scanning state.

In some examples, sensing device 46 may generate a sensing signal upon sensing that moving part 42 is displaced relative to base 44. Therefore, it can be timely detected that scanning mechanism 100 is in the abnormal scanning state.

In some examples, sensing device 46 may generate the sensing signal upon sensing that moving part 42 is displaced relative to base 44 and a displacement amount exceeds a preset threshold. In this case, a displacement amount of moving part 42 relative to base 44 can be monitored by sensing device 46. When the displacement amount exceeds the preset threshold, sensing device 46 sends the sensing signal, so that the scanning mechanism can be timely enabled to stop scanning based on the sensing signal to protect the scanning mechanism from damage. In addition, the sensitivity of sensing device 46 in detecting the displacement amount can be adjusted by adjusting the preset threshold. In addition, by setting the preset threshold within an appropriate range, the influence of external interference (for example, vibration) on sensing device 46 can be eliminated, thereby improving the accuracy of sensing device 46 in detecting the displacement amount.

In some examples, sensing device 46 may generate a first detection signal upon sensing that moving part 42 and base 44 remain relatively stationary. In addition, when moving part 42 is displaced relative to base 44 and the displacement amount exceeds the preset threshold, sensing device 46 may generate a second detection signal (that is, the sensing signal).

In some examples, the preset threshold may be manually set according to actual application requirements. In some examples, the preset threshold may be set according to a working principle of sensing device 46. For example, if sensing device 46 is a photoelectric sensor, the preset threshold may be a distance value; and if sensing device 46 is a force sensor, the preset threshold may be a pressure value.

In some examples, the operation of scanning mechanism 100 is controlled based on the sensing signal. Further, in some examples, scanning mechanism 100 may be enabled to stop scanning based on the sensing signal. In some examples, profile measuring instrument 1 may control scanning mechanism 100 to stop scanning based on the sensing signal. Specifically, profile measuring instrument 1 may learn that scanning mechanism 100 is in the abnormal scanning state based on the sensing signal, so that profile measuring instrument 1 may control second driving mechanism 220 to stop driving scanning mechanism 100 to enable scanning mechanism 100 to stop moving. In this case, when scanning mechanism 100 is in the abnormal scanning state, scanning mechanism 100 can be protected from damage by timely controlling scanning mechanism 100 to stop moving.

However, the present disclosure is not limited thereto. In other examples, scanning mechanism 100 may also be controlled by an external device (for example, an upper computer and the like), and the external device may control scanning mechanism 100 to stop scanning based on the sensing signal. For example, the external device may cut off a power supply of profile measuring instrument 1 based on the sensing signal, thereby enabling scanning mechanism 100 to stop scanning.

In some examples, referring to FIG. 4, sensing device 46 may include sensing unit 460 and sensing plate 464, wherein sensing unit 460 may cooperate with sensing plate 464 to generate the sensing signal. In some examples, sensing device 46 may generate the sensing signal in response to relative displacement between sensing unit 460 and sensing plate 464.

In some examples, sensing unit 460 may be disposed on base 44, and sensing plate 464 may be disposed on moving part 42. Specifically, sensing unit 460 may be fixedly disposed on base 44, and sensing plate 464 may be fixedly disposed on moving part 42. In this case, when moving part 42 and base 44 are displaced relative to each other, sensing plate 464 and sensing unit 460 can be displaced relative to each other synchronously, so that sensing device 46 can generate the sensing signal upon sensing that moving part 42 and base 44 are displaced relative to each other.

However, the present disclosure is not limited thereto. In other examples, sensing unit 460 may be fixedly disposed on moving part 42, and sensing plate 464 may be fixedly disposed on base 44. Therefore, sensing device 46 can also generate the sensing signal upon sensing that moving part 42 and base 44 are displaced relative to each other.

In some examples, referring to FIG. 5, sensing device 46 may be disposed on moving part 42 and base 44. That is, sensing unit 460 and sensing plate 464 may be positioned above moving part 42 and base 44. In this case, when sensing plate 464 and sensing unit 460 are displaced relative to each other synchronously in response to the relative displacement between moving part 42 and base 44, sensing plate 464 or sensing unit 460 can have more displacement space. In addition, sensing device 46, moving part 42 and base 44 can form a relatively compact structure.

Specifically, referring to FIG. 5, base 44 may be fixedly connected to bottom plate 50, that is, base 44 and moving part 42 may be disposed on bottom plate 50. In addition, bracket 466 higher than moving part 42 and base 44 may also be fixedly disposed on bottom plate 50, and sensing unit 460 may be fixedly disposed on bracket 466. That is, sensing unit 460 is fixedly connected to bracket 466, bracket 466 is fixedly connected to bottom plate 50, and base 44 is fixedly connected to bottom plate 50, so that sensing unit 460 may be fixedly connected to base 44, and sensing unit 460 may be positioned above moving part 42 and base 44.

In addition, sensing plate 464 may be fixedly disposed at the top of moving part 42, and sensing plate 464 may cooperate with sensing unit 460 disposed on bracket 466. In some examples, sensing unit 460 may be positioned above sensing plate 464, and sensing plate 464 may be positioned below sensing unit 460.

In some examples, referring to FIG. 5, sensing unit 460 may have sliding slot 462, and sliding slot 462 may extend along the scanning direction. In addition, sensing plate 464 may be in the shape of a long board. The cooperation between sensing plate 464 and sensing unit 460 may represent that when sensing plate 464 and sensing unit 460 are displaced relative to each other, sensing plate 464 may movably move into or out of sliding slot 462, so that sensing device 46 generates the sensing signal.

In some examples, the preset threshold may represent the displacement amount of sensing plate 464 relative to sensing unit 460, and the displacement amount may refer to a distance of movement of sensing plate 464 into or out of sliding slot 462.

In some examples, the number of sensing devices 46 may be two, and two sensing devices 46 may be disposed side by side along the scanning direction. For example, referring to FIG. 5, two sensing devices 46 are respectively first sensing device 46a and second sensing device 46b, and first sensing device 46a and second sensing device 46b may be disposed side by side along the scanning direction. First sensing device 46a may include first sensing unit 460a and first sensing plate 464a, wherein first sensing unit 460a may further have first sliding slot 462a. In addition, second sensing device 46b may include second sensing unit 460b and second sensing plate 464b, wherein second sensing unit 460b may further have second sliding slot 462b.

Specifically, referring to FIG. 5, first sensing plate 464a and second sensing plate 464b may be fixedly disposed at the top of moving part 42 side by side along the scanning direction. In addition, first sensing unit 460a may be fixedly disposed on bracket 466, so that one end of first sensing plate 464a facing the negative direction of the X-axis is inserted into first sliding slot 462a, and second sensing unit 460b may be fixedly disposed on bracket 466, so that one end of second sensing plate 464b facing the positive direction of the X-axis is inserted into second sliding slot 462b. That is, when moving part 42 and base 44 remain relatively stationary, one end of first sensing plate 464a facing the negative direction of the X-axis may be positioned in first sliding slot 462a and one end of second sensing plate 464b facing the positive direction of the X-axis may be positioned in second sliding slot 462b.

However, the present disclosure is not limited thereto. In other examples, when moving part 42 and base 44 remain relatively stationary, one end of first sensing plate 464a facing the positive direction of the X-axis may be inserted into first sliding slot 462a and one end of second sensing plate 464b facing the negative direction of the X-axis may be inserted into second sliding slot 462b.

In some examples, referring to FIG. 5, during a process where scanning mechanism 100 drives detection element 20 to move along the positive direction of the X-axis, when moving part 42 is displaced relative to base 44, first sensing plate 464a may be displaced relative to first sensing unit 460a, that is, first sensing plate 464a may stop moving with moving part 42, and first sliding slot 462a may move relative to first sensing plate 464a along the positive direction of the X-axis with base 44, so that first sensing plate 464a remains in first sliding slot 462a.

Correspondingly, sliding slot 462 may be displaced relative to second sensing unit 460b, that is, sliding slot 462 may stop moving with moving part 42, second sliding slot 462b may move relative to sliding slot 462 along the positive direction of the X-axis with base 44 to enable sliding slot 462 to move out of second sliding slot 462b, and second sensing device 46b generates the sensing signal when sliding slot 462 moves out of second sliding slot 462b. In this case, second sensing device 46b generates the sensing signal, so that it can be learnt that scanning mechanism 100 is in the abnormal scanning state when detection element 20 moves along the positive direction of the X-axis, thereby controlling scanning mechanism 100 to stop moving along the positive direction of the X-axis.

In some examples, referring to FIG. 5, during a process where scanning mechanism 100 drives detection element 20 to move along the negative direction of the X-axis, when base 44 is displaced relative to moving part 42, sliding slot 462 may be displaced relative to second sensing unit 460b, that is, sliding slot 462 may stop moving with moving part 42, and second sliding slot 462b may move relative to sliding slot 462 along the negative direction of the X-axis with base 44, so that sliding slot 462 remains in second sliding slot 462b.

Correspondingly, first sensing plate 464a may be displaced relative to first sensing unit 460a, that is, first sensing plate 464a may stop moving with moving part 42, first sliding slot 462a may move relative to first sensing plate 464a along the negative direction of the X-axis with base 44 to enable first sensing plate 464a to move out of first sliding slot 462a, and first sensing device 46a generates the sensing signal when first sensing plate 464a moves out of first sliding slot 462a. In this case, first sensing device 46a generates the sensing signal, it can be learnt that scanning mechanism 100 is in the abnormal scanning state when detection element 20 moves along the negative direction of the X-axis, thereby controlling scanning mechanism 100 to stop moving along the negative direction of the X-axis.

In summary, first sensing device 46a and second sensing device 46b are disposed side by side along the scanning direction, so that first sensing device 46a is utilized to detect whether scanning mechanism 100 is in the abnormal scanning state when detection element 20 moves along the negative direction of the X-axis. In addition, second sensing device 46b is utilized to detect whether scanning mechanism 100 is in the abnormal scanning state when detection element 20 moves along the positive direction of the X-axis. Therefore, protection system 40 can protect scanning mechanism 100 in two directions of the X-axis.

Further, corresponding protection measures can be taken based on the abnormal scanning states of scanning mechanism 100 in different moving directions. For example, when it is detected that scanning mechanism 100 is in the abnormal scanning state when detection element 20 moves along the negative direction of the X-axis, profile measuring instrument 1 can record a moving direction and time of scanning mechanism 100 and remind an operator, so that the operator confirms whether profile measuring instrument 1 needs to be recalibrated.

In some examples, sensing device 46 may also be a sensor which deforms upon sensing that moving part 42 is displaced relative to base 44. For example, sensing device 46 may be a force sensor, wherein the force sensor may have a sensitive unit which deforms upon sensing an external acting force.

In some examples, the force sensor may be mounted on base 44. When moving part 42 and base 44 are displaced relative to each other or tend to be displaced relative to each other, moving part 42 may apply pressure to the force sensor, and the pressure may enable the sensitive unit of the force sensor to deform. When the pressure exceeds a preset threshold, the force sensor may generate a sensing signal based on a deformation amount of the sensitive unit. Therefore, the force sensor can generate the sensing signal upon sensing that the moving part is displaced relative to the base.

In addition, in some examples, the force sensor may be mounted on moving part 42. When moving part 42 and base 44 are displaced relative to each other or tend to be displaced relative to each other, base 44 may apply pressure to the force sensor, and the pressure may enable the sensitive unit of the force sensor to deform. When the pressure exceeds the preset threshold, the force sensor can also generate the sensing signal based on the deformation amount of the sensitive unit.

In some examples, the force sensor may be, for example, a strain gauge force sensor, a piezoelectric force sensor, or a magneto-strictive force sensor, and the like.

As described above, referring to FIG. 6, protection system 40 may further include elastic reset device 48. Elastic reset device 48 may be used to enable moving part 42 and base 44 to remain relatively stationary. In addition, elastic reset device 48 may be used to provide elastic potential energy to restore moving part 42 and base 44 to an initial position, and the initial position may represent a position where moving part 42 and base 44 remain relatively stationary during a process of scanning the object to be measured by scanning mechanism 100.

In some examples, referring to FIG. 6, elastic reset device 48 may include connecting rod 483. Connecting rod 483 may be used to connect base 44 and moving part 42.

In some examples, referring to FIG. 6, connecting rod 483 may be parallel to scanning shaft 10, and connecting rod 483 may be movably disposed between base 44 and moving part 42. In this case, connecting rod 483 can be parallel to the X-axis, so that base 44 and moving part 42 sleeved on connecting rod 483 slide relative to each other along the scanning direction.

In some examples, referring to FIG. 6, moving part 42 may include first connecting block 420, and first connecting block 420 may be movably sleeved on connecting rod 483. That is, first connecting block 420 is movably sleeved on connecting rod 483, so that moving part 42 can be movably disposed on connecting rod 483. In this case, first connecting block 420 can move along the scanning direction, so that moving part 42 can be movably connected to connecting rod 483 and moving part 42 moves along the scanning direction, thereby facilitating the cooperation of moving part 42 with first fastener 484 and first elastic element 481 (described later) on connecting rod 483 to enable protection system 40 to achieve a preset function.

In some examples, referring to FIG. 6, base 44 may include second connecting block 440, and second connecting block 440 may be movably sleeved on connecting rod 483. That is, second connecting block 440 is movably sleeved on connecting rod 483, so that base 44 can be movably sleeved on connecting rod 483. In this case, second connecting block 440 can move along the scanning direction, so that base 44 can be movably connected to connecting rod 483 and base 44 moves along the scanning direction, thereby facilitating the cooperation of base 44 with second fastener 485 and second elastic element 482 (described later) on connecting rod 483 to enable protection system 40 to achieve a preset function.

In some examples, referring to FIG. 6, elastic reset device 48 may include first elastic element 481, second elastic element 482, first fastener 484 and second fastener 485. First elastic element 481 and second elastic element 482 may be used to accumulate and release elastic potential energy. First fastener 484 and second fastener 485 may be fixedly disposed on connecting rod 483.

In some examples, first elastic element 481 may be connected to first fastener 484 and first connecting block 420. In addition, second elastic element 482 may be connected to second fastener 485 and second connecting block 440. In this case, when first elastic element 481 accumulates or releases elastic potential energy, first elastic element 481 can apply an elastic acting force to moving part 42. In addition, when second elastic element 482 accumulates or releases elastic potential energy, second elastic element 482 can apply an elastic acting force to base 44.

In some examples, first fastener 484 and second fastener 485 may be fixedly connected to connecting rod 483 respectively. Therefore, first fastener 484 and second fastener 485 can remain relatively stationary with connecting rod 483.

In some examples, first fastener 484 and second fastener 485 may be fixedly connected to connecting rod 483 by means of threaded connection respectively. In this case, it can be convenient to adjust positions of first fastener 484 and second fastener 485 on connecting rod 483. When first elastic element 481 is connected to first fastener 484 and first connecting block 420, a length of first elastic element 481 can be adjusted by adjusting the position of first fastener 484 on connecting rod 483. In addition, when second elastic element 482 is connected to second fastener 485 and second connecting block 440, a length of second elastic element 482 can be adjusted by adjusting the position of second fastener 485 on connecting rod 483.

In some examples, first elastic element 481 may be adjusted to an appropriate length range according to the requirement for the cooperation of moving part 42 with first fastener 484 and first elastic element 481. In other words, adjusting the length of first elastic element 481 may enable moving part 42 to cooperate with first fastener 484 and first elastic element 481, so that protection system 40 can achieve a preset function. In addition, in some examples, second elastic element 482 may be adjusted to an appropriate length range according to the requirement for the cooperation of base 44 with second fastener 485 and second elastic element 482. In other words, adjusting the length of second elastic element 482 may enable base 44 to cooperate with second fastener 485 and second elastic element 482, so that protection system 40 can achieve a preset function.

Specifically, since a length change of the elastic element is positively correlated with an elastic acting force of the elastic element, an elastic acting force (that is, a first elastic acting force) applied by first elastic element 481 to first fastener 484 and first connecting block 420 may be adjusted by adjusting the length change of first elastic element 481. In addition, anelastic acting force (that is, a second elastic acting force) applied by second elastic element 482 to second fastener 485 and second connecting block 440 may be adjusted by adjusting the length change of second elastic element 482. The first elastic acting force may enable first connecting block 420 to be stationary relative to first fastener 484, so that moving part 42 is stationary relative to connecting rod 483. In addition, the second elastic acting force may enable second connecting block 440 to be stationary relative to second fastener 485, so that base 44 is stationary relative to connecting rod 483. Therefore, moving part 42 and base 44 can remain relatively stationary.

In some examples, the cooperation of moving part 42 with first fastener 484 and first elastic element 481, and the cooperation of base 44 with second fastener 485 and second elastic element 482 may enable protection system 40 to achieve a preset function.

Specifically, moving part 42 may be configured to cooperate with first fastener 484 and first elastic element 481, and base 44 may be configured to cooperate with second fastener 485 and second elastic element 482, so as to achieve:

moving part 42 and base 44 remain relatively stationary when the first elastic acting force applied by first elastic element 481 to moving part 42 is greater than a frictional force applied to detection element 20 during scanning of the object to be measured; in addition, moving part 42 and base 44 remain relatively stationary when the second elastic acting force applied by second elastic element 482 to base 44 is greater than the frictional force applied to detection element 20 during scanning of the object to be measured. In other words, moving part 42 and base 44 may remain relatively stationary when the first elastic acting force applied by first elastic element 481 to moving part 42 or the second elastic acting force applied by second elastic element 482 to base 44 is greater than the frictional force applied to detection element 20 during scanning of the object to be measured. In this case, during a process where scanning mechanism 100 drives detection element 20 to scan the object to be measured, by enabling moving part 42 and base 44 to remain relatively stationary, the occurrence of a case where moving part 42 slides relative to base 44 due to inertia can be suppressed, that is, the possibility that moving part 42 is displaced relative to base 44 due to inertia can be reduced. Therefore, scanning mechanism 100 can have better stability, so that the accuracy of the acquired profile data can be improved.

The reason why moving part 42 and base 44 remain relatively stationary during scanning of the object to be measured by scanning mechanism 100 may include: since the frictional force applied to detection element 20 is less than the first elastic acting force and the second elastic acting force, the frictional force cannot break the relatively stationary state of moving part 42 and base 44, so that moving part 42 and base 44 can remain relatively stationary. In other words, the frictional force cannot enable first elastic element 481 or second elastic element 482 to deform again, and then moving part 42 and base 44 remain a relatively stable stationary state under the action of the first elastic acting force and the second elastic acting force.

In some examples, moving part 42 may be configured to cooperate with first fastener 484 and first elastic element 481, and base 44 may be configured to cooperate with second fastener 485 and second elastic element 482, so as to achieve: moving part 42 is displaced relative to base 44 when the first elastic acting force is less than the frictional force; in addition, moving part 42 is displaced relative to base 44 when the second elastic acting force is less than the frictional force. In this case, sensing device 46 can timely detect that scanning mechanism 100 is in the abnormal scanning state by sensing the relative displacement between moving part 42 and base 44, so that scanning mechanism 100 can be timely controlled to stop moving to protect scanning mechanism 100.

The reason why moving part 42 and base 44 are displaced relative to each other during a process of scanning the object to be measured by scanning mechanism 100 may include: since the frictional force applied to detection element 20 is greater than the first elastic acting force and the second elastic acting force, the frictional force can break the relatively stationary state of moving part 42 and base 44, so that moving part 42 and base 44 are displaced relative to each other.

In addition, in some examples, moving part 42 may be configured to cooperate with first fastener 484 and first elastic element 481, and base 44 may be configured to cooperate with second fastener 485 and second elastic element 482, so as to achieve: moving part 42 is displaced relative to base 44 when the first elastic acting force is less than an impact force applied to detection element 20; in addition, moving part 42 is displaced relative to base 44 when the second elastic acting force is less than the impact force applied to detection element 20. In this case, sensing device 46 can timely detect that scanning mechanism 100 is in the abnormal scanning state by sensing the relative displacement between moving part 42 and base 44, so that scanning mechanism 100 can be timely controlled to stop moving to protect scanning mechanism 100.

In some examples, when moving part 42 is displaced relative to base 44, first elastic element 481 or second elastic element 482 may further accumulate elastic potential energy. In this case, during a process of accumulating elastic potential energy by first elastic element 481 or second elastic element 482, the frictional force or impact force applied to detection element 20 can be buffered, so that the impact of an external acting force on scanning mechanism 100 can be reduced, thereby enabling scanning mechanism 100 to obtain buffer protection.

In some examples, the release of elastic potential energy by first elastic element 481 or second elastic element 482 may restore moving part 42 and base 44 to an initial position.

In some examples, during a process where scanning mechanism 100 drives detection element 20 to scan the object to be measured, when the frictional force applied to detection element 20 is greater than the first elastic acting force or the second elastic acting force, it can be considered that detection element 20 is blocked by the object to be measured. In addition, when the impact force applied to detection element 20 is greater than the first elastic acting force or the second elastic acting force, it can be considered that detection element 20 is blocked by the object to be measured.

In some examples, detection element 20 being blocked by the object to be measured may include, for example, detection element 20 being caught by pits (or burrs) on the surface of the object to be measured, detection element 20 colliding with the object to be measured, and other conditions.

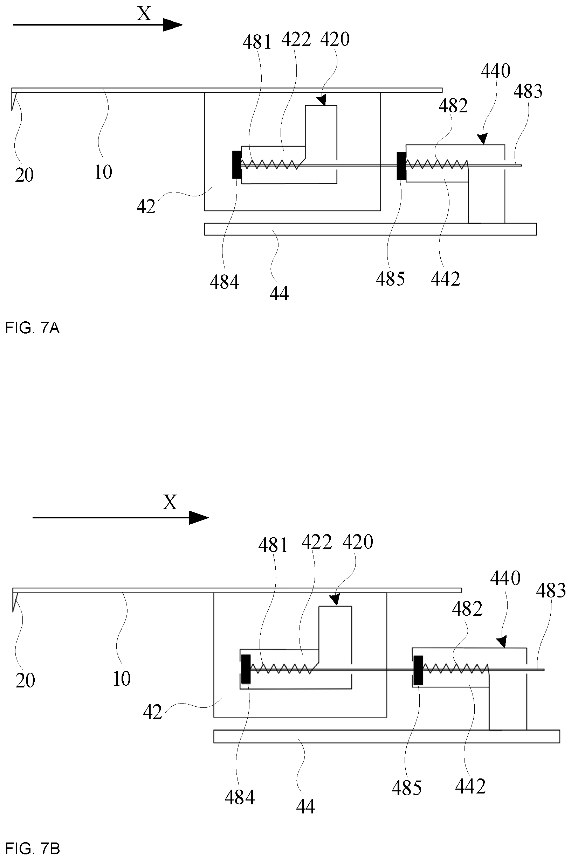

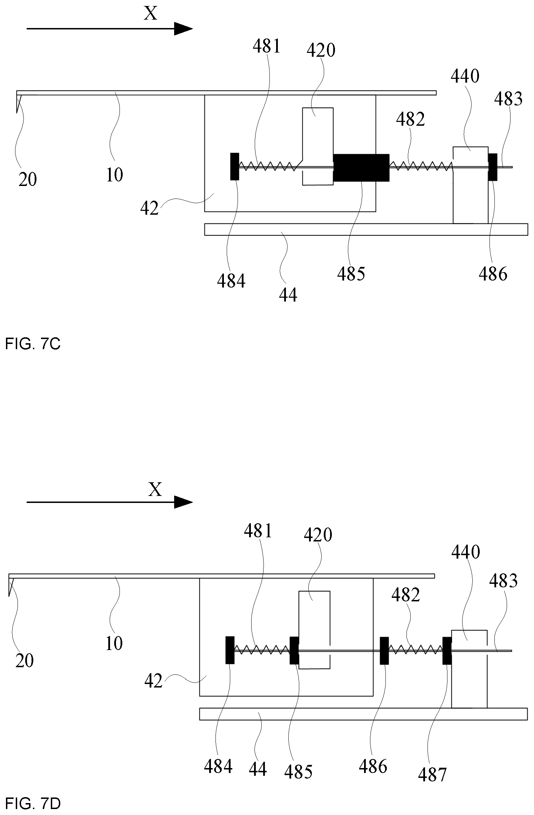

FIG. 7A is a schematic diagram showing a first alternative embodiment of elastic reset device 48 according to an example of the present disclosure. FIG. 7B is a schematic diagram showing a second alternative embodiment of elastic reset device 48 according to an example of the present disclosure. FIG. 7C is a schematic diagram showing a third alternative embodiment of elastic reset device 48 according to an example of the present disclosure. FIG. 7D is a schematic diagram showing a fourth alternative embodiment of elastic reset device 48 according to an example of the present disclosure.

In some examples, referring to FIG. 7A and FIG. 7B, first connecting block 420 may extend toward a length direction of connecting rod 483 (for example, toward the negative direction of the X-axis) to form first extension part 422, wherein first extension part 422 may be hollow, that is, first extension part 422 may have a hollow structure.

In some examples, first extension part 422 may be movably sleeved on connecting rod 483. Specifically, first extension part 422 may be movably sleeved on connecting rod 483 in a manner of inserting connecting rod 483 into the hollow structure. In this case, first extension part 422 can facilitate the cooperation of first connecting block 420 with first fastener 484 and first elastic element 481 on connecting rod 483 to enable protection system 40 to achieve a preset function, thereby protecting scanning mechanism 100.

In some examples, referring to FIG. 7A and FIG. 7B, second connecting block 440 may extend toward the length direction of connecting rod 483 (that is, toward the negative direction of the X-axis) to form second extension part 442, wherein second extension part 442 may be hollow, that is, second extension part 442 may have a hollow structure.

In some examples, second extension part 442 may be movably sleeved on connecting rod 483. Specifically, second extension part 442 may be movably sleeved on connecting rod 483 in a manner of inserting connecting rod 483 into the hollow structure. In this case, second extension part 442 can facilitate the cooperation of second connecting block 440 with second fastener 485 and second elastic element 482 on connecting rod 483 to enable protection system 40 to achieve a preset function, thereby protecting scanning mechanism 100.

A cooperation process of moving part 42 with first fastener 484 and first elastic element 481, and a cooperation process of base 44 with second fastener 485 and second elastic element 482 will be described and explained below with reference to a plurality of alternative embodiments.

### [First alternative embodiment]

In some examples, referring to FIG. 7A, first extension part 422 may be movably sleeved on an outer periphery of first elastic element 481, first elastic element 481 may be connected to first fastener 484 and first connecting block 420, and first elastic element 481 may be stretched to enable first extension part 422 to abut against one side of first fastener 484 facing second fastener 485. In other words, the cooperation of moving part 42 with first fastener 484 and first elastic element 481 may include: first extension part 422 being movably sleeved on the outer periphery of first elastic element 481, one end of first elastic element 481 being connected to first fastener 484 and the other end thereof being connected to first connecting block 420, and first elastic element 481 applying a pulling force to first connecting block 420 to enable first extension part 422 to abut against one side of first fastener 484 facing second fastener 485.

In addition, referring to FIG. 7A, second extension part 442 may be movably sleeved on an outer periphery of second elastic element 482, second elastic element 482 may be connected to second fastener 485 and second connecting block 440, and second elastic element 482 may be stretched to enable second extension part 442 to abut against one side of second fastener 485 away from first fastener 484. In other words, the cooperation of base 44 with second fastener 485 and second elastic element 482 may include: second extension part 442 being movably sleeved on the outer periphery of second elastic element 482, one end of second elastic element 482 being connected to second fastener 485 and the other end thereof being connected to second connecting block 440, and second elastic element 482 applying a pulling force to second connecting block 440 to enable second extension part 442 to abut against one side of second fastener 485 away from first fastener 484.

Referring to FIG. 7A, during a movement process of scanning mechanism 100 along the positive direction of the X-axis, when detection element 20 is blocked by the object to be measured, scanning shaft 10 stops moving, moving part 42 connected to scanning shaft 10 stops moving, but base 44 continues to move along the positive direction of the X-axis, thereby enabling base 44 to be displaced relative to moving part 42.

In addition, second connecting block 440 continues to move along the positive direction of the X-axis with base 44, so that second extension part 442 moves relative to second fastener 485 to enable second extension part 442 to disengage from contact with second fastener 485, and second extension part 442 can further stretch second elastic element 482 to enable second elastic element 482 to further accumulate elastic potential energy. During a process of accumulating elastic potential energy by second elastic element 482, an acting force applied by the object to be measured to detection element 20 due to the blocking of detection element 20 by the object to be measured can be buffered.

In addition, after detection element 20 disengages from the blocking of the object to be measured, the release of elastic potential energy by second elastic element 482 can be utilized to pull second fastener 485 to enable second fastener 485 to abut against second extension part 442 again, thereby driving moving part 42 to slide relative to base 44 through connecting rod 483, so that moving part 42 and base 44 are restored to the initial position where they remain relatively stationary.

Referring to FIG. 7A, during a movement process of scanning mechanism 100 along the negative direction of the X-axis, when detection element 20 is blocked by the object to be measured, scanning shaft 10 stops moving, moving part 42 connected to scanning shaft 10 stops moving, but base 44 continues to move along the negative direction of the X-axis, thereby enabling base 44 to be displaced relative to moving part 42.

In addition, second connecting block 440 continues to move along the negative direction of the X-axis with base 44, so that second extension part 442 drives connecting rod 483 to move along the negative direction of the X-axis through second fastener 485, then first fastener 484 moves relative to first connecting block 420 to enable first fastener 484 to disengage from contact with first extension part 422, and first fastener 484 may further stretch first elastic element 481 to enable first elastic element 481 to further accumulate elastic potential energy. During a process of accumulating elastic potential energy by first elastic element 481, an acting force applied by the object to be measured to detection element 20 due to the blocking of detection element 20 by the object to be measured can be buffered.

In addition, after detection element 20 disengages from the blocking of the object to be measured, the release of elastic potential energy by first elastic element 481 can be utilized to pull first extension part 422 to enable first extension part 422 to abut against first fastener 484 again, thereby driving moving part 42 to slide relative to base 44, so that moving part 42 and base 44 are restored to the initial position.

In this alternative embodiment, first elastic element 481 in a stretched state applies a pulling force to first connecting block 420 to enable first extension part 422 to abut against first fastener 484, and second elastic element 482 in a stretched state applies a pulling force to second connecting block 440 to enable second extension part 442 to abut against second fastener 485. Since first fastener 484 and second fastener 485 are fixedly disposed on connecting rod 483 respectively, a relatively stable relative stationary state can be remained between first connecting block 420 and second connecting block 440. During the process of scanning the object to be measured by detection element 20, the occurrence of a case where moving part 42 slides relative to base 44 due to inertia can be suppressed, that is, the possibility that moving part 42 is displaced relative to base 44 due to inertia can be reduced. Therefore, scanning mechanism 100 can have better stability. In addition, moving part 42 and base 44 can remain relatively stationary with fewer components, and elastic reset device 48 can occupy less space.

### [Second alternative embodiment]

In some examples, referring to FIG. 7B, first extension part 422 may be movably sleeved on outer peripheries of first elastic element 481 and first fastener 484, first elastic element 481 may be connected to first fastener 484 and first connecting block 420, and first elastic element 481 may be compressed to enable first extension part 422 to abut against one side of first fastener 484 away from second fastener 485. In other words, the cooperation of moving part 42 with first fastener 484 and first elastic element 481 may include: first extension part 422 being movably sleeved on the outer peripheries of first elastic element 481 and first fastener 484, first elastic element 481 applying a pushing force to first fastener 484 and first connecting block 420, and first extension part 422 abutting against one side of first fastener 484 away from second fastener 485 due to the pushing force.

In addition, referring to FIG. 7B, second extension part 442 may be movably sleeved on outer peripheries of second elastic element 482 and second fastener 485, second elastic element 482 may be connected to second fastener 485 and second connecting block 440, and second elastic element 482 may be compressed to enable second extension part 442 to abut against one side of second fastener 485 facing first fastener 484. In other words, the cooperation of base 44 with second fastener 485 and second elastic element 482 may include: second extension part 442 being movably sleeved on the outer peripheries of second elastic element 482 and second fastener 485, second elastic element 482 applying a pushing force to second fastener 485 and second connecting block 440, and second extension part 442 abutting against one side of second fastener 485 facing first fastener 484 due to the pushing force.

Referring to FIG. 7B, during a movement process of scanning mechanism 100 along the positive direction of the X-axis, when detection element 20 is blocked by the object to be measured, scanning shaft 10 stops moving, moving part 42 connected to scanning shaft 10 stops moving, but base 44 continues to move along the positive direction of the X-axis, thereby enabling base 44 to be displaced relative to moving part 42.

In addition, second connecting block 440 continues to move along the positive direction of the X-axis with base 44, so that second extension part 442 drives connecting rod 483 to move along the positive direction of the X-axis through second fastener 485, then first fastener 484 moves relative to first connecting block 420 to enable first fastener 484 to disengage from contact with first extension part 422, and first fastener 484 may further compress first elastic element 481 to enable first elastic element 481 to further accumulate elastic potential energy. During a process of accumulating elastic potential energy by first elastic element 481, an acting force applied by the object to be measured to detection element 20 due to the blocking of detection element 20 by the object to be measured can be buffered.

In addition, after detection element 20 disengages from the blocking of the object to be measured, the release of elastic potential energy by first elastic element 481 can be utilized to push first extension part 422 to enable first extension part 422 to abut against first fastener 484 again, thereby driving moving part 42 to slide relative to base 44, so that moving part 42 and base 44 are restored to the initial position where they remain relatively stationary.

Referring to FIG. 7B, during a movement process of scanning mechanism 100 along the negative direction of the X-axis, when detection element 20 is blocked by the object to be measured, scanning shaft 10 stops moving, moving part 42 connected to scanning shaft 10 stops moving, but base 44 continues to move along the negative direction of the X-axis, thereby enabling base 44 to be displaced relative to moving part 42.

In addition, second connecting block 440 continues to move along the negative direction of the X-axis with base 44, so that second extension part 442 moves relative to second fastener 485 to enable second extension part 442 to disengage from contact with second fastener 485, and second extension part 442 may further compress second elastic element 482 to enable second elastic element 482 to further accumulate elastic potential energy. During a process of accumulating elastic potential energy by second elastic element 482, an acting force applied by the object to be measured to detection element 20 due to the blocking of detection element 20 by the object to be measured can be buffered.

In addition, after detection element 20 disengages from the blocking of the object to be measured, the release of elastic potential energy by second elastic element 482 can be utilized to push second fastener 485 to move relative to second connecting block 440 to enable second fastener 485 to abut against second extension part 442 again, thereby driving moving part 42 to slide relative to base 44 through connecting rod 483, so that moving part 42 and base 44 are restored to the initial position where they remain relatively stationary.

In this alternative embodiment, first elastic element 481 in a compressed state applies a pushing force to first connecting block 420 to enable first extension part 422 to abut against first fastener 484, and second elastic element 482 in a compressed state applies a pushing force to second connecting block 440 to enable second extension part 442 to abut against second fastener 485. Since first fastener 484 and second fastener 485 are fixedly disposed on connecting rod 483 respectively, a relatively stable relative stationary state can be remained between first connecting block 420 and second connecting block 440. During a process of scanning the object to be measured by detection element 20, the occurrence of a case where moving part 42 slides relative to base 44 due to inertia can be suppressed, that is, the possibility that moving part 42 is displaced relative to base 44 due to inertia can be reduced. Therefore, scanning mechanism 100 can have better stability. In addition, moving part 42 and base 44 can remain relatively stationary with fewer components, and elastic reset device 48 can occupy less space.

### [Third alternative embodiment]

In some examples, referring to FIG. 7C, elastic reset device 48 may further include third fastener 486, and first fastener 484, second fastener 485 and third fastener 486 may be disposed on connecting rod 483 in sequence. In some examples, first fastener 484, second fastener 485 and third fastener 486 may be disposed on connecting rod 483 in sequence along the positive direction of the X-axis. In addition, the connection manner of third fastener 486 to connecting rod 483 may be the same as that of first fastener 484 or second fastener 485 to connecting rod 483.

In some examples, referring to FIG. 7C, first elastic element 481 may be connected to first fastener 484 and first connecting block 420, first connecting block 420 may be positioned between first fastener 484 and second fastener 485, and first elastic element 481 may be compressed to enable first connecting block 420 to abut against second fastener 485. In other words, the cooperation of moving part 42 with first fastener 484 and first elastic element 481 may include: first connecting block 420 and first elastic element 481 being positioned between first fastener 484 and second fastener 485, and first elastic element 481 applying a pushing force to first fastener 484 and first connecting block 420 respectively to enable first connecting block 420 to abut against second fastener 485.

In addition, referring to FIG. 7C, second elastic element 482 may be connected to second fastener 485 and second connecting block 440, second connecting block 440 may be positioned between second fastener 485 and third fastener 486, and second elastic element 482 is compressed to enable second connecting block 440 to abut against third fastener 486. In other words, the cooperation of base 44 with second fastener 485 and second elastic element 482 may include: second connecting block 440 and second elastic element 482 being positioned between second fastener 485 and third fastener 486, and second elastic element 482 applying a pushing force to second fastener 485 and second connecting block 440 respectively to enable second connecting block 440 to abut against third fastener 486.

Referring to FIG. 7C, during a movement process of scanning mechanism 100 along the positive direction of the X-axis, when detection element 20 is blocked by the object to be measured, scanning shaft 10 stops moving, moving part 42 connected to scanning shaft 10 stops moving, but base 44 continues to move along the positive direction of the X-axis, thereby enabling base 44 to be displaced relative to moving part 42.

In addition, second connecting block 440 continues to move along the positive direction of the X-axis with base 44, so that second connecting block 440 drives connecting rod 483 to move along the positive direction of the X-axis through third fastener 486, then second fastener 485 moves relative to first connecting block 420 to enable second fastener 485 to disengage from contact with first connecting block 420, and first fastener 484 also moves relative to first connecting block 420, thereby further compressing first elastic element 481 to enable first elastic element 481 to further accumulate elastic potential energy. During a process of accumulating elastic potential energy by first elastic element 481, an acting force applied by the object to be measured to detection element 20 due to the blocking of detection element 20 by the object to be measured can be buffered.

In addition, after detection element 20 disengages from the blocking of the object to be measured, the release of elastic potential energy by first elastic element 481 can be utilized to push first connecting block 420 to enable first connecting block 420 to abut against second fastener 485 again, thereby driving moving part 42 to slide relative to base 44, so that moving part 42 and base 44 are restored to the initial position where they remain relatively stationary.

Referring to FIG. 7C, during a movement process of scanning mechanism 100 along the negative direction of the X-axis, when detection element 20 is blocked by the object to be measured, scanning shaft 10 stops moving, moving part 42 connected to scanning shaft 10 stops moving, but base 44 continues to move along the negative direction of the X-axis, thereby enabling base 44 to be displaced relative to moving part 42.

In addition, second connecting block 440 continues to move along the negative direction of the X-axis with base 44, so that second connecting block 440 moves relative to third fastener 486 to enable second connecting block 440 to disengage from contact with third fastener 486, and second connecting block 440 may further compress second elastic element 482 to enable second elastic element 482 to further accumulate elastic potential energy. During a process of accumulating elastic potential energy by second elastic element 482, an acting force applied by the object to be measured to detection element 20 due to the blocking of detection element 20 by the object to be measured can be buffered.

In addition, after detection element 20 disengages from the blocking of the object to be measured, the release of elastic potential energy by second elastic element 482 can be utilized to push second fastener 485 to move toward second connecting block 440, thereby driving third fastener 486 to abut against second connecting block 440 again through connecting rod 483, and since first connecting block 420 abuts against second fastener 485, first connecting block 420 can be pushed through second fastener 485 to enable moving part 42 to slide relative to base 44, so that moving part 42 and base 44 are restored to the initial position where they remain relatively stationary.

In this alternative embodiment, first elastic element 481 in a compressed state applies a pushing force to first connecting block 420 to enable first connecting block 420 to abut against second fastener 485, and second elastic element 482 in a compressed state applies a pushing force to second connecting block 440 to enable second connecting block 440 to abut against third fastener 486. Since first fastener 484, second fastener 485 and third fastener 486 are fixedly disposed on connecting rod 483 respectively,a relatively stable relative stationary state can be remained between first connecting block 420 and second connecting block 440. During a process of scanning the object to be measured by detection element 20, the occurrence of a case where moving part 42 slides relative to base 44 due to inertia can be suppressed, that is, the possibility that moving part 42 is displaced relative to base 44 due to inertia can be reduced. Therefore, scanning mechanism 100 can have better stability.

### [Fourth alternative embodiment]

In some examples, referring to FIG. 7D, elastic reset device 48 may include third fastener 486 and fourth fastener 487, and first fastener 484, second fastener 485, third fastener 486 and fourth fastener 487 may be disposed on connecting rod 483 in sequence. In some examples, first fastener 484, second fastener 485, third fastener 486 and fourth fastener 487 may be disposed on connecting rod 483 in sequence along the positive direction of the X-axis. In addition, the connection manner of third fastener 486 and fourth fastener 487 to connecting rod 483 may be the same as that of first fastener 484 or second fastener 485 to connecting rod 483.

In some examples, referring to FIG. 7D, first elastic element 481 may be connected to first fastener 484 and first connecting block 420, first connecting block 420 may be positioned between second fastener 485 and third fastener 486, and first elastic element 481 may be stretched to enable first connecting block 420 to abut against second fastener 485. In other words, the cooperation of moving part 42 with first fastener 484 and first elastic element 481 may include: first connecting block 420 being positioned between second fastener 485 and third fastener 486, one end of first elastic element 481 being connected to first fastener 484 and the other end thereof being connected to first connecting block 420, and first elastic element 481 applying a pulling force to first connecting block 420 to enable first connecting block 420 to abut against second fastener 485.

In addition, referring to FIG. 7D, second elastic element 482 may be connected to third fastener 486 and second connecting block 440, second connecting block 440 may be positioned on one side of fourth fastener 487 away from third fastener 486, and second elastic element 482 may be stretched to enable second connecting block 440 to abut against fourth fastener 487. In other words, the cooperation of base 44 with second fastener 485 and second elastic element 482 may include: second connecting block 440 being positioned on one side of fourth fastener 487 away from third fastener 486, one end of second elastic element 482 being connected to third fastener 486 and the other end thereof being connected to second connecting block 440, and second elastic element 482 applying a pulling force to second connecting block 440 to enable second connecting block 440 to abut against fourth fastener 487.

Referring to FIG. 7D, during a movement process of scanning mechanism 100 along the positive direction of the X-axis, when detection element 20 is blocked by the object to be measured, scanning shaft 10 stops moving, moving part 42 connected to scanning shaft 10 stops moving, but base 44 continues to move along the positive direction of the X-axis, thereby enabling base 44 to be displaced relative to moving part 42.

In addition, second connecting block 440 continues to move along the positive direction of the X-axis with base 44, so that second connecting block 440 moves relative to fourth fastener 487 to enable second connecting block 440 to disengage from contact with fourth fastener 487, and second connecting block 440 may further stretch second elastic element 482 to enable second elastic element 482 to further accumulate elastic potential energy. During a process of accumulating elastic potential energy by second elastic element 482, an acting force applied by the object to be measured to detection element 20 due to the blocking of detection element 20 by the object to be measured can be buffered.

In addition, after detection element 20 disengages from the blocking of the object to be measured, the release of elastic potential energy by second elastic element 482 can be utilized to pull third fastener 486 to move toward second connecting block 440, thereby driving fourth fastener 487 to abut against second connecting block 440 again through connecting rod 483, and driving moving part 42 to slide relative to base 44 through connecting rod 483, so that moving part 42 and base 44 are restored to the initial position where they remain relatively stationary.

Referring to FIG. 7D, during a movement process of scanning mechanism 100 along the negative direction of the X-axis, when detection element 20 is blocked by the object to be measured, scanning shaft 10 stops moving, moving part 42 connected to scanning shaft 10 stops moving, but base 44 continues to move along the negative direction of the X-axis, thereby enabling base 44 to be displaced relative to moving part 42.

In addition, second connecting block 440 continues to move along the negative direction of the X-axis with base 44, so that second connecting block 440 drives connecting rod 483 to move along the negative direction of the X-axis through fourth fastener 487, then first fastener 484 and second fastener 485 move relative to first connecting block 420 to enable second fastener 485 to disengage from contact with first connecting block 420, and first fastener 484 may further stretch first elastic element 481 to enable first elastic element 481 to further accumulate elastic potential energy. During a process of accumulating elastic potential energy by first elastic element 481, an acting force applied by the object to be measured to detection element 20 due to the blocking of detection element 20 by the object to be measured can be buffered.

In addition, after detection element 20 disengages from the blocking of the object to be measured, the release of elastic potential energy by first elastic element 481 can be utilized to pull first connecting block 420 to enable first connecting block 420 to abut against second fastener 485 again, and moving part 42 is driven to slide relative to base 44 through first connecting block 420, so that moving part 42 and base 44 are restored to the initial position where they remain relatively stationary.

In this alternative embodiment, first elastic element 481 in a stretched state applies a pulling force to first connecting block 420 to enable first connecting block 420 to abut against second fastener 485, and second elastic element 482 in a stretched state applies a pulling force to second connecting block 440 to enable second connecting block 440 to abut against fourth fastener 487. Since first fastener 484, second fastener 485, third fastener 486 and fourth fastener 487 are fixedly disposed on connecting rod 483 respectively, a relatively stable relative stationary state can be remained between first connecting block 420 and second connecting block 440. During a process of scanning the object to be measured by detection element 20, the occurrence of a case where moving part 42 slides relative to base 44 due to inertia can be suppressed, that is, the possibility that moving part 42 is displaced relative to base 44 due to inertia can be reduced. Therefore, scanning mechanism 100 can have better stability.

It should be noted that a cooperation relationship of moving part 42 with first fastener 484 and first elastic element 481, and a cooperation relationship of base 44 with second fastener 485 and second elastic element 482 according to various alternative embodiments described above may be used in any combination in protection system 40, which is not limited in the present disclosure.

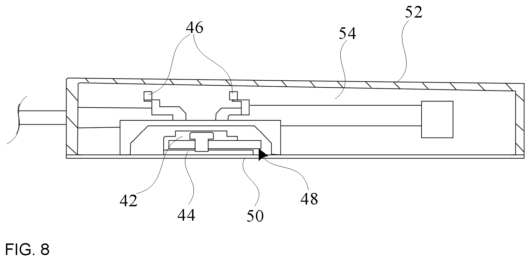

FIG. 8 is a schematic diagram showing a cross section of scanning mechanism 100 according to an example of the present disclosure.

In some examples, first elastic element 481 may be a spring, and first elastic element 481 may be sleeved on connecting rod 483. In this case, when first elastic element 481 releases elastic potential energy, the stability of an elastic force (for example, a pulling force or a pushing force) applied by first elastic element 481 to first connecting block 420 can be improved.

In addition, in some examples, second elastic element 482 may be a spring, and second elastic element 482 may be sleeved on connecting rod 483. In this case, when second elastic element 482 releases elastic potential energy, the stability of an elastic acting force (for example, a pulling force or a pushing force) applied by second elastic element 482 to second connecting block 440 can be improved.

In some examples, referring to FIG. 8, protection system 40 may further include housing 52. Housing 52 may cooperate with bottom plate 50 to form closed accommodating chamber 54.

In some examples, base 44, moving part 42, sensing device 46 and elastic reset device 48 may be positioned in accommodating chamber 54. That is, referring to FIG. 8, base 44, moving part 42, sensing device 46 and elastic reset device 48 may be disposed in closed accommodating chamber 54 formed by the cooperation of housing 52 and bottom plate 50. Therefore, protection system 40 can be well sealed and protected.

According to the present disclosure, scanning mechanism 100 with protection system 40 can be provided, wherein protection system 40 can protect scanning mechanism 100 and enable scanning mechanism 100 to have better stability.

Although the present disclosure has been specifically explained above with reference to the accompanying drawings and examples, it should be understood that the above explanation does not limit the present disclosure in any form. Those skilled in the art may make modifications and variations to the present disclosure as needed without departing from the essential spirit and scope of the present disclosure, and these modifications and variations all fall within the scope of the present disclosure.

## Claims

1. A scanning mechanism with a protection system, the scanning mechanism comprising a detection element for scanning an object to be measured, **characterized in that**,
the protection system comprises a base, a moving part, a sensing device, and an elastic reset device,
the detection element is disposed on the moving part, and the moving part is movably connected to the base through the elastic reset device,
the sensing device generates a sensing signal upon sensing that the moving part is displaced relative to the base and a displacement amount exceeds a preset threshold, and
the scanning mechanism is enabled to stop scanning based on the sensing signal.

2. The scanning mechanism according to claim 1, **characterized in that**,
the detection element scans the object to be measured in a manner of abutting against the object to be measured, the elastic reset device comprises a first elastic element, a second elastic element, a connecting rod movably disposed between the base and the moving part, and a first fastener and a second fastener fixedly disposed on the connecting rod,
the moving part is configured to cooperate with the first fastener and the first elastic element, and the base is configured to cooperate with the second fastener and the second elastic element, so as to achieve:
the moving part and the base remain relatively stationary when a first elastic acting force applied by the first elastic element to the moving part or a second elastic acting force applied by the second elastic element to the base is greater than a frictional force applied to the detection element during scanning of the object to be measured;
the moving part is displaced relative to the base when the first elastic acting force or the second elastic acting force is less than the frictional force; and
the moving part is displaced relative to the base when the first elastic acting force or the second elastic acting force is less than an impact force applied to the detection element.

3. The scanning mechanism according to claim 2, **characterized in that**,
the first elastic element or the second elastic element further accumulates elastic potential energy when the moving part is displaced relative to the base.

4. The scanning mechanism according to claim 2, **characterized in that**,
the scanning mechanism comprises a scanning shaft, the detection element is connected to one end of the scanning shaft, the connecting rod is parallel to the scanning shaft, the moving part comprises a first connecting block, the first connecting block is movably sleeved on the connecting rod, the base comprises a second connecting block, and the second connecting block is movably sleeved on the connecting rod.

5. The scanning mechanism according to claim 4, **characterized in that**,
the elastic reset device comprises a third fastener, and the first fastener, the second fastener and the third fastener are fixedly disposed on the connecting rod in sequence,
the first elastic element is connected to the first fastener and the first connecting block, the first connecting block is positioned between the first fastener and the second fastener, and the first elastic element is compressed to enable the first connecting block to abut against the second fastener, and
the second elastic element is connected to the second fastener and the second connecting block, the second connecting block is positioned between the second fastener and the third fastener, and the second elastic element is compressed to enable the second connecting block to abut against the third fastener.

6. The scanning mechanism according to claim 4, **characterized in that**,
the elastic reset device comprises a third fastener and a fourth fastener, and the first fastener, the second fastener, the third fastener and the fourth fastener are fixedly disposed on the connecting rod in sequence,
the first elastic element is connected to the first fastener and the first connecting block, the first connecting block is positioned between the second fastener and the third fastener, and the first elastic element is stretched to enable the first connecting block to abut against the second fastener, and
the second elastic element is connected to the third fastener and the second connecting block, the second connecting block is positioned on one side of the fourth fastener away from the third fastener, and the second elastic element is stretched to enable the second connecting block to abut against the fourth fastener.

7. The scanning mechanism according to claim 4, **characterized in that**,
the first connecting block extends toward a length direction of the connecting rod to form a hollow first extension part, and the second connecting block extends toward the length direction of the connecting rod to form a hollow second extension part, wherein the first extension part and the second extension part are movably sleeved on the connecting rod.

8. The scanning mechanism according to claim 7, **characterized in that**,
the first extension part is movably sleeved on an outer periphery of the first elastic element, the first elastic element is connected to the first fastener and the first connecting block, and the first elastic element is stretched to enable the first extension part to abut against one side of the first fastener facing the second fastener, and
the second extension part is movably sleeved on an outer periphery of the second elastic element, the second elastic element is connected to the second fastener and the second connecting block, and the second elastic element is stretched to enable the second extension part to abut against one side of the second fastener away from the first fastener.

9. The scanning mechanism according to claim 7, **characterized in that**,
the first extension part is movably sleeved on outer peripheries of the first elastic element and the first fastener, the first elastic element is connected to the first fastener and the first connecting block, and the first elastic element is compressed to enable the first extension part to abut against one side of the first fastener away from the second fastener, and
the second extension part is movably sleeved on outer peripheries of the second elastic element and the second fastener, the second elastic element is connected to the second fastener and the second connecting block, and the second elastic element is compressed to enable the second extension part to abut against one side of the second fastener facing the first fastener.

10. The scanning mechanism according to claim 1, **characterized in that**,
the sensing device comprises a sensing plate disposed on the moving part, and a sensing unit disposed on the base and cooperating with the sensing plate.
